(19) Europäisches Patentamt
European Patent Office
Office européen des brevets

(11) EP 4 268 934 A1

(12) # EUROPEAN PATENT APPLICATION

(43) Date of publication:
**01.11.2023 Bulletin 2023/44**

(21) Application number: **22170163.4**

(22) Date of filing: **27.04.2022**

(51) International Patent Classification (IPC):
***B01D 53/14** (2006.01)* ***B01D 53/62** (2006.01)*
***C25B 1/01** (2021.01)* ***C25B 1/16** (2006.01)*
***B01D 53/96** (2006.01)*

(52) Cooperative Patent Classification (CPC):
**B01D 53/1425; B01D 53/1475; B01D 53/62; B01D 53/965; C25B 1/01; C25B 1/16;**
B01D 2251/304; B01D 2251/306; B01D 2251/604; B01D 2252/10; B01D 2257/504; B01D 2258/06; C25B 11/032; C25B 11/056; C25B 11/065; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **PAUL SCHERRER INSTITUT
5232 Villigen PSI (CH)**

(72) Inventors:
- **MUROYAMA, Alenxander
5400 Baden (CH)**
- **GUBLER, Lorenz
5417 Untersiggenthal (CH)**

(74) Representative: **Fischer, Michael
Siemens AG
Postfach 22 16 34
80506 München (DE)**

(54) **A SYSTEM FOR ELECTROCHEMICALLY RELEASING CARBON DIOXIDE BEING CAPTURED IN AN AQUEOUS SOLUTION TO A HYDROGEN GAS STREAM**

(57) The use of atmospheric $CO_2$ as a chemical feedstock is a promising way to decarbonize the chemical and transportation sectors, which currently rely heavily on fossil fuels. This transition requires new technologies to reduce the energy required to capture and separate $CO_2$.

Here, the present invention discloses a system for capturing carbon dioxide in an aqueous alkaline solution and electrochemically releasing the captured carbon dioxide to a hydrogen-comprising gas stream while simultaneously regenerating the aqueous alkaline solution, said system comprising:
a) a contactor unit (8) for bringing air (10) or another carbon dioxide comprising gas stream into contact with the aqueous alkaline solution (12) thereby capturing carbon dioxide by the at least partial transformation of the aqueous alkaline solution (12) into a carbonate and/or bicarbonate comprising solution (14);
b) an electrochemical cell (16) comprising an anion-exchange membrane (18) and a cathode compartment (20) and an anode compartment (22), said anion-exchange membrane (20) separating the cathode compartment (20) from the anode compartment (22);
c) a first feeder (24) that supplies the carbonate and/or bicarbonate comprising solution (14) to the cathode compartment (20) thereby enabling a hydrogen evolution reaction to take place in order to generate hydroxide ions thus regenerating the aqueous alkaline solution (12) and transporting carbonate anions through the anion-exchange membrane (18) to the anode compartment (22);
d) a second feeder (26) that supplies a hydrogen comprising gas stream (28) to the anode compartment (22) thereby providing the anode as hydrogen depolarized anode thus evolving gaseous carbon dioxide; and
e) an exhaust gas duct (30) to evacuate the hydrogen depleted and carbon dioxide enriched gas stream (6) from the anode compartment (22) for further processing of the components of the hydrogen depleted and carbon dioxide enriched gas stream (6), preferably of the carbon dioxide content therein.

This system and the process executed herewith simultaneously regenerates the $CO_2$ capture solution on the feed side while enriching a stream of $H_2$ with $CO_2$ on the permeate side of the cell. The present results show a high $CO_2$ transport faradaic efficiency when supplying an alkaline solution, such as a pure $K_2CO_3$ solution, at current densities up to 60 $mA/cm^2$. A small cathode gap benefites cell operation by preventing membrane transport of $OH^-$, although with an increased ohmic resistance. This represents a step forward in the application of electrochemistry to drive processes that are critical to $CO_2$ valorization.

EP 4 268 934 A1

FIG 1

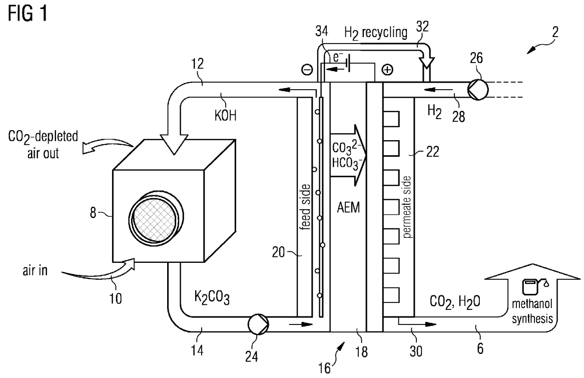


(52) Cooperative Patent Classification (CPC): (Cont.)
C25B 11/081

## Description

The present invention relates to a system for capturing carbon dioxide in an aqueous solution and electrochemically releasing the carbon dioxide to a hydrogen gas stream while simultaneously regenerating the aqueous solution.

The massive scale of global anthropogenic $CO_2$ emissions and the ever-increasing concentration of atmospheric $CO_2$ necessitate a coordinated and multifaceted approach towards decarbonization to avoid catastrophic climate change. This will need to take place through, among other efforts, a phase-out of fossil fuels, increased deployment of renewable energy, and widespread carbon capture and utilization/sequestration for hard-to-decarbonize sectors. Electrochemical methods of $CO_2$ capture represent a promising alternative to conventional thermally driven capture processes, as they can efficiently utilize cheap renewable electrons and have flexible architectures for plug-and-play integration. These approaches could also be readily coupled with electrochemical valorization processes (e.g., electrolysis) to provide chemicals or liquid fuels.

In order to have a closed carbon cycle, $CO_2$ captured for combustible synfuels must have a non-fossil origin. It will not be technologically feasible, for example, to incorporate onboard $CO_2$ capture for commercial aviation in the near term. Therefore, direct-air capture (DAC) is a preferred technological route for a $CO_2$-to-products scenario. Because of the relatively minute quantity of $CO_2$ contained in air, this presents technical challenges associated with processing large amounts of air and efficiently running an electrochemical process to remove it.

Previous work has shown that direct gas phase separation of $CO_2$ from air is possible using an electrochemical cell, but faradaic efficiencies and current densities are inherently limited by the flow of reactants. The incorporation of an inexpensive capture solution (e.g. KOH, NaOH) addresses this challenge, as much higher current densities can be applied to regenerate a solution that contains $CO_2$ in a concentrated form (e.g., carbonate, bicarbonate).

The most mature technology for electrochemical $CO_2$ regeneration from carbonate is bipolar membrane electrodialysis. Previous studies have investigated the use of an ion-exchange membrane stack to regenerate carbonate capture solution with current densities exceeding 100 $mA \cdot cm^{-2}$. The key challenges associated with this approach are large ohmic resistances in the stack, undesirable reactions at the electrodes, and resistances due to gas evolution within the stack. Other studies have investigated the direct electrochemical conversion of carbonate solution to form CO or formate. These systems utilize a bipolar membrane to dissociate $H_2O$ and generate protons to drive acid-base reactions with (bi)-carbonate.

As a result, significant amounts of $H_2$ are generated at overpotentials that are high compared to state-of-the-art proton exchange membrane water electrolysis. Therefore, an objective for the present invention is present in terms of a need for alternative regeneration approaches that have the potential to reduce overall energy requirements while providing flexibility in the molar ratios of $CO_2$:$H_2$ produced.

This objective is achieved according to the present invention by a system for capturing carbon dioxide in an aqueous alkaline solution and electrochemically releasing the captured carbon dioxide to a hydrogen-comprising gas stream while simultaneously regenerating the aqueous alkaline solution, said system comprising:

a) a contactor unit for bringing air or another carbon dioxide comprising gas stream into contact with the aqueous alkaline solution thereby capturing carbon dioxide by the at least partial transformation of the aqueous alkaline solution into a carbonate and/or bicarbonate comprising solution;
b) an electrochemical cell comprising an anion-exchange membrane and a cathode compartment and an anode compartment, said anion-exchange membrane separating the cathode compartment from the anode compartment;
c) a first feeder that supplies the carbonate and/or bicarbonate comprising solution to the cathode compartment thereby enabling a hydrogen evolution reaction to take place in order to generate hydroxide ions thus regenerating the aqueous alkaline solution and transportingcarbonate anions through the anion-exchange membrane to the anode compartment;
d) a second feeder that supplies a hydrogen comprising gas stream to the anode compartment thereby providing the anode as hydrogen depolarized anode thus evolving gaseous carbon dioxide; and
e) an exhaust gas duct to evacuate the hydrogen depleted and carbon dioxide enriched gas stream from the anode compartment for further processing of the components of the exhaust gas stream, preferably of the carbon dioxide content therein.

Thus, this system provides a path to simultaneously regenerate the $CO_2$ alkaline capture solution on the feed side while enriching a stream of $H_2$ with $CO_2$ on the permeate side (anode side) of the electrochemical cell. The present system shows a high $CO_2$ transport faradaic efficiency when supplying aqueous alkaline solutions, such as pure $K_2CO_3$ solution, at current densities up to 60 $mA/cm^2$. A small cathode gap benefites cell operation by preventing a membrane transport of $OH^-$, although with an increased ohmic resistance. The present system therefore represents a step forward in the application of electrochemistry to drive processes that are critical to $CO_2$ valorization.

In order to increase the efficiency of the system, a preferred embodiment of the present invention provides for

a system where the hydrogen generated in the cathode compartment is recycled into the anode compartment as hydrogen feed.

Process-wise preferred conditions can be achieved when the reactions in the cathode compartment take place in the liquid phase (liquid to membrane interface) and reactions in the anode compartment take place in the gas phase (gas to membrane interface).

In a further preferred embodiment of the present invention, a 3D electrode, preferably such as a stainless steel expanded mesh, can be employed at the cathode side and a gas diffusion electrode, preferably a catalyst-coated gas diffusion electrode, can be employed at the anode side. Suitably, the catalyst coating may comprise Pt/C.

In order to further support the efficiency of the reaction on the cathode side of the electrochemical cell, pure carbonate or bicarbonate solution may be used as the feed to the cathode compartment.

In a further preferred embodiment of the present invention, an electrical potential can be applied over the electrochemical cell to drive the electrochemical reactions on both sides of the electrochemical cell.

Further, to set an optimal working point for the operation of the electrochemical cell, the ratio of hydrogen to carbon dioxide in the anode compartment can be regulated through an adjustment of the current over the electrochemical cell and/or the flowrate of the hydrogen feed.

Preferred embodiment of the present invention are hereinafter described in more detail with reference to the attached drawings which depict in:

Figure 1 schematically a system for capture and release of carbon dioxide using an electrochemical regeneration process from a carbonate capture solution;

Figure 2 schematically the effect of gap width on ion transport within the cathode compartment;

Figure 3 (a) Area specific resistance, (b) faradaic efficiency, and (c) energy consumption for a 1 M $K_2CO_3$ solution plotted against current density for the 1 mm gap and zero gap cathode configurations; error bars represent standard deviation for triplicate experiments;

Figure 4 (a) uncorrected and iR-corrected cell voltage, (b) faradaic efficiency, and (c) energy consumption for the 0.5, 1, and 2 M solutions of $K_2CO_3$ plotted against current density; error bars represent standard deviation for triplicate experiments;

Figure 5 bar plot for the steady-state inlet and outlet solution pH values for the 60 $mA \cdot cm^{-2}$ current hold; and

Figure 6 Faradaic efficiency at 60 $mA \cdot cm^{-2}$ for various cathode flow rates of 1 M $K_2CO_3$ in the zero gap and 1 mm gap configurations; error bars represent standard deviation for triplicate experiments.

The present invention discloses a new system for $CO_2$ regeneration from a carbonate capture solution ($K_2CO_3$) through a driven anion exchange membrane (AEM) cell depolarized with hydrogen. The relevant electrochemical reactions are the hydrogen evolution reaction (HER) on the cathode side, taking place in the aqueous capture solution:

$$2H_2O + 2e^- \rightarrow H_2 + 20H \qquad [1]$$

$E_{eq}$ = -0.828 V vs. SHE (pH = 14)
and the hydrogen oxidation reaction (HOR) in the presence of carbonate on the anode side, taking place in the gas phase:

$$H_2 + 20H^- \rightarrow 2H_2O + 2e^- \qquad [2]$$

$E_{eq}$ = -0.828 V vs. SHE (pH = 14) and

$$H_2 + CO_3^{2-} \longrightarrow H_2O + 2e^- + CO_2 \qquad [3]$$

$E_{eq}$ = -0.630 V vs. SHE.

There is thus no net consumption or generation of $H_2$ in the system, the evolved $H_2$ separated from the cathode loop can be recycled to the anode side, and KOH exiting the cell can be recycled to the capture step. The benefit of depolarizing the cell with $H_2$ is the reduction of overpotentials across the cell and the relative ease of $H_2O$ separation from the product stream compared with $O_2$.

A system 2 for capturing carbon dioxide in an aqueous alkaline solution 12 and electrochemically releasing the

captured carbon dioxide to a hydrogen-comprising gas stream 6 while simultaneously regenerating the aqueous alkaline solution and the process executed with the system 2 is shown schematically in Figure 1. The system 2 comprises a contactor unit 8 for bringing air 10 or another carbon dioxide comprising gas stream into contact with the aqueous alkaline solution 12 thereby capturing carbon dioxide by the at least partial transformation of the aqueous alkaline solution into a carbonate and/or bicarbonate comprising solution 14.

The system 2 further comprises an electrochemical cell 16 having an anion-exchange membrane 18 and a cathode compartment 20 and an anode compartment 22, said anion-exchange membrane 18 fluid-wise separating the cathode compartment 20 from the anode compartment 22. A first feeder 24 supplies the carbonate and/or bicarbonate comprising solution 14 to the cathode compartment 20 thereby enabling a hydrogen evolution reaction to take place in order to generate hydroxide ions thus regenerating the aqueous alkaline solution 12 and electro-migrating carbonate anions through the anion-exchange membrane 18 to the anode compartment 22. This gaseous hydrogen content in the aqueous alkaline solution 12 is recycled via a recycling duct 32 to a hydrogen comprising gas stream 28. On the anode side, a second feeder 26 supplies the hydrogen comprising gas stream 28 to the anode compartment 22 thereby providing the anode as hydrogen depolarized anode thus evolving gaseous carbon dioxide on the permeate anode side (the anode compartment 22). An exhaust gas duct 30 to the anode compartment 22 is provided to evacuate the hydrogen depleted and carbon dioxide enriched gas stream 6 from the anode compartment 22 for further processing of the components of the exhaust gas stream (here the hydrogen depleted and carbon dioxide enriched gas stream 6). Preferably, the carbon dioxide content in the gas stream 6 can be used for catalytic fuel synthesis, such as methanol (MeOH) synthesis therein. Further, an electrical potential 34 is applied over the electrochemical cell 16 to drive the electrochemical reactions on both sides of the electrochemical cell 16.

The net result is the extraction of $CO_2$ from the carbonate solution on the anode (=permeate) side and an aqueous solution with a higher pH exiting the cell on the cathode (=feed) side, and the resulting mixture of $CO_2$ and residual $H_2$ could be used for catalytic fuel synthesis such as methanol (MeOH) synthesis. Direct electrochemical conversion of $CO_2$ to MeOH is an area of ongoing research that is still in an early stage compared to thermo-catalytic approaches due to challenges with catalyst selectivity, activity, and stability.

A series of galvanostatic experiments have been performed using a cell with an active area of 10 $cm^2$, the details of which can be found in the supporting information below. A stainless-steel expanded mesh served as the cathode, a Pt/C catalyst-coated gas diffusion electrode served as the anode, and the two compartments were separated by an AEM. Two different gap distances between the cathode and membrane, a zero gap and a 1 mm gap, were achieved by using different thicknesses of a PTFE flow frame. An additional PP mesh was used in the 1 mm gap to support the membrane.

In all experiments, reactions on the cathode took place in the liquid phase and reactions on the anode took place in a gas phase at ambient temperatures and pressures. No external humidification of gases was necessary, as sufficient $H_2O$ was produced on the anode through hydrogen oxidation and electro-osmotic drag from the cathode to the anode. $K_2CO_3$ solution was fed to the cathode using a peristaltic pump and cell voltage, anode-side $CO_2$ concentration, and cathode pH were temporally monitored. The key performance metrics that follow from the data are faradaic efficiency and molar specific energy consumption. Due to the detection limit of the gas analysis, specific ratios of $H_2$:$CO_2$ were not targeted, but this could feasibly be accomplished through adjustment of the $H_2$ flow and/or operating current density.

The cathode gap width plays a critical role in the transport of $CO_3^{2-}$ to the membrane and $OH^-$ out of the cell, as shown schematically in Figure 2. The zero-gap electrode configuration is commonly used in alkaline water electrolysis to reduce the ohmic losses. However, unlike in alkaline electrolysis, the present system has the additional challenge of maximizing transport of $CO_3^{2-}$ from the incoming solution across the membrane. For this reason, a zero-gap configuration will have competing effects: the ohmic drop will decrease and $OH^-$ generated at the cathode is more likely to be transported across the membrane instead of $CO_3^{2-}$. In addition, the gap width has an influence on bubble transport by affecting the velocity of the flow.

Figure 2 schematically demonstrates the effect of gap width on ion transport within the cathode compartment. The 1 mm gap increases the ohmic drop but reduces favorably the possibility of undesirable $OH^-$ transport in the AEM. The zero gap configuration decreases favorably the ohmic drop but increases $OH^-$ transport in the AEM.

The results of cell polarizations with the two gap widths using 1 M $K_2CO_3$ as the catholyte are shown in Figure 3. The clear effect of the zero gap on ohmic drop is observed in Figure 3a, which shows the area specific resistance (ASR), determined using impedance spectroscopy, plotted against current density. The ASR of the zero gap cell is approximately half of that of the 1 mm gap cell, indicating that the reduced gap width allows for more efficient ion conduction through a shorter path length and possibly enhanced bubble transport. The zero gap leads to a drop in the faradaic efficiency to ~30% (Figure 3b), indicating that significant amounts of $OH^-$generated at the cathode are transported across the AEM. These competing effects result in a larger energy consumption for the zero gap configuration, as shown in Figure 3c.

Therefore, the more critical influence is the undesired $OH^-$transport, and one essential goal of future electrode designs should be the optimization of $CO_3^{2-}$ and $OH^-$ flows within the system. Further studies investigating the effect of

catholyte flow rate are presented in the supporting information below.

The results of the cell polarizations with varying carbonate solution molarity using the 1 mm gap configuration are presented in Figure 4. The full and iR-corrected cell voltages (Figure 4a) show an effect of the solution molarity on the ohmic resistance in the cell, particularly for the 0.5 M solution. The conductivity of the solution varies between 80-200 $mS \cdot cm^{-1}$, and therefore the lower concentration of solution induces a greater voltage drop. The similarity in iR-corrected cell voltage across the three concentrations of $K_2CO_3$ indicates that cathode potential is relatively unaffected by solution concentration. The faradaic efficiency (Figure 4b) is not significantly affected by solution molarity, although values are slightly higher for the higher molarity solution.

Therefore, $CO_3^{2-}$ is the primary charge carrier in the system, corresponding to a faradaic efficiency of 50%, with some $OH^-$transport accounting for lower values. In order for values >50% to be reached, $HCO_3^-$ must be a charge carrier; however, this can be achieved by further exposure of the capture solution to atmospheric $CO_2$ and an associated increase in the energy expense of the capture step. The differences in the process energy consumption (Figure 4c) can be mostly attributed to the effect of solution concentration on cell voltage. The 1 M solution yields the lowest energy consumption at low to moderate current densities, while the 2 M solution becomes advantageous at current densities >50 $mA \cdot cm^{-2}$. The 0.5 M solution generally has the highest energy consumption, with the minimum value occurring at 10 $mA \cdot cm^{-2}$ due to the steep increase in faradaic efficiency. While operating at high current densities is critical in reducing the capital expenditures of the regeneration step, there were challenges operating at higher current densities in the form of higher, less stable cell voltage.

Within the landscape of $CO_2$ capture and conversion technologies, there are a number of different routes by which carbonate or bicarbonate can be electrochemically transformed into products. The present approach occupies a unique position in the electrochemical $CO_2$ capture field, as it requires $H_2$ for operation, but conceptually does not result in any net consumption of $H_2$ if evolved $H_2$ is separated and recycled from the cathode to the anode. In addition, the $CO_2$ is not converted to a higher energy product, and thus lower potentials are required to drive a more selective process. The ratio of $H_2$:$CO_2$ could therefore be tuned by changing the flow rate of $H_2$ on the anode side of the cell such that it is suitable for a downstream catalytic process, for example, 3 for MeOH synthesis or 4 for synthetic natural gas (Sabatier process).

Additionally, a separate PEM electrolysis process could provide the $H_2$ at high efficiencies and current densities, and the described electrochemical carbonate process could be used to subsequently "enrich" the stream with atmospheric $CO_2$. There could be additional benefits to the disclosed approach, such as the ability to operate the cell at increased pressures and enrich a pressurized $H_2$ stream while suppressing bubble formation at the cathode and reducing losses. A continuously pressurized process would not be possible in a bipolar membrane electrodialysis configuration, for example, as the system needs to be depressurized in order to liberate the dissolved $CO_2$ from the solution.

The development of novel electrochemical conversion methodologies necessitates a discussion on how they could be integrated with conventional, scaled technologies. The required energy for $H_2$ electrolysis is approximately 400 $kJ \cdot mol_{H2}^{-1}$, and 3 mol are required for every 1 mol of $CO_2$ for the synthesis of methanol. Therefore, the $H_2$ electrolysis process would require 1200 $kJ \cdot mol_{MeOH}^{-1}$. As the $CO_2$ capture step is thermodynamically downhill, it has a relatively low energy consumption of 13-30 $kJ \cdot mol_{CO2}^{-1}$ for fan and pumping requirements in the air contactor.

The next critical piece is the electrochemical $CO_2$ enrichment process, which could have energy requirements between 200-400 $kJ \cdot mol_{CO2}^{-1}$. The MeOH synthesis step (i.e., $CO_2$ hydrogenation) will also require energy, but is a commercially mature process (TRL 7) with recent plants producing MeOH at the 100 kton per annum scale. The reaction itself is exothermic, but an integrated plant would require an estimated 169 $kJ \cdot mol_{MeOH}$ of energy due to compression, pumping, and auxiliary heating and cooling requirements, according to modeling performed for a commercial scale plant.

This brief analysis does not represent a full accounting of energy requirements for every plant component, but provides a rough estimate of 1582-1799 $kJ \cdot mol_{MeOH}$ for the entire process, making it between 40-46% efficient in terms of $HHV_{MeoH}$ (727 $kJ \cdot mol_{MeOH}^{-1}$). For reference, an analysis of a methanol plant based on steam methane reforming found an equivalent energy input of 1070 $kJ \cdot mol_{MeOH}$, or an overall efficiency of 68%. It should be noted, however, that starting from a fossil fuel provides a thermodynamic advantage over air as the feedstock and leads to a significantly higher greenhouse gas contribution over the life cycle of the fuel.

Therefore, the present invention discloses a system for executing an electrochemical process that utilizes an AEM to enrich an $H_2$ stream with $CO_2$ originating from a carbonate capture solution. The present results show stable operation and a clear electrochemical carbonate pumping effect from solution, with carbonate concentration and electrode gap width influencing performance. In order to develop the electrochemical $CO_2$ enrichment concept further, overpotentials can be reduced through judicious catalyst selection and electrode design. In addition, efforts can be made to improve the industrial relevance of the application by increasing the current density, duration, and possibly the pressure of cell operation. These advancements will allow $CO_2$ capture and utilization routes to become less energy and cost intensive and therefore open pathways for scaled deployment.

Experimental methods/supporting information

For polarization experiments, a 3D cathode mesh, anion exchange membrane (AEM), and gas diffusion electrode (GDE) as the anode were assembled in a cell with a 10 $cm^2$ active area (MicroFlowCell, ElectroCell). The AEMs (Fumasep FAA-3-50, FUMATECH BWT) were prepared by exchanging them twice in aqueous $K_2CO_3$ solution to replace the counter-ion. GDEs were prepared by spraying a gas diffusion layer (29BC, SIGRACET) with catalyst ink, which consisted of Pt/C nanoparticles (TEC10E50E, TANAKA), KHCO3-exchanged alkaline ionomer foil (Fumasep FAA-3-film, FUMATECH BWT) 5% wt. dissolved in ethanol, and a mixture of $H_2O$ and isopropanol. The ink was applied to a catalyst loading of 0.4 mg·$cm^{-2}$. The cathode was an expanded mesh of 316 stainless steel with a thickness of 3.3 mm.

Prior to cell assembly, membranes were rinsed with water to remove excess $K_2CO_3$. A 2 mm or 1 mm PTFE flow frame was used for the cathode compartment for the 1 mm gap or zero gap configurations, respectively. An additional PP mesh was used to separate and support the membrane from the cathode side in the 1 mm gap configuration. The anode side used a 4 mm thick carbon felt (AAF304ZS, Toyobo) to support the GDE and allow for flow of gases to the catalyst layer. FPM gaskets were used to seal the cell and the bolts of the cell were tightened using a torque wrench. A Pt100 temperature sensor was used to monitor the cell temperature at the anode. A peristaltic pump (ECOLINE VC-Easy-Load, ISMATECH) was used to pump the catholyte at flow rates between 5 and 50 ml·$min^{-1}$. A mass flow controller was used to supply $H_2$ on the anode side. A potentiostat was used to apply current and take impedance measurements for determination of area specific resistance (ASR). Anode outlet gas was analyzed for $CO_2$ concentration using a non-dispersive infrared detector. The device was calibrated to a range of 0-10000 ppm $CO_2$, and ice traps were used to condense any residual water in the gas prior to analysis.

The carbonate solution was prepared using $K_2CO_3$ powder dissolved in water. Regenerated solution was collected at the outlet and disposed of. The solution temperature and pH were monitored at the inlet and outlet of the cell using Pt100 sensors and pH electrodes. $H_2$ was separated out of the cathode stream and vented to a flammable gas exhaust.

All testing took place at ambient temperature and pressure conditions. The carbonate solution was fed to the cathode at 5 ml·$min^{-1}$ and $H_2$ was fed to the anode at 500 ml·$min^{-1}$. The cells were then exposed to a 30 mA·$cm^{-2}$ conditioning step for 1 h, followed by an OCV hold for 20 minutes and ascending and descending galvanostatic steps of 10 minutes each. An impedance sweep from 200 kHz to 2 Hz with an amplitude of 10% of the applied current was performed at the end of each step to obtain the high frequency resistance. Steady-state data from the last minute of each ascending and descending step were used to obtain the average output values for a given current density. Current densities were limited to 60 mA·$cm^{-2}$ due to sustained voltage spikes at higher current densities, possibly due to bubble formation or poor contact between the membrane and the GDE.

Faradaic efficiency and specific energy consumption were evaluated as $\varepsilon_F = \frac{\dot{n}_{CO_2} F}{I}$ and $E = \frac{IV}{\dot{n}_{CO_2}}$, respectively, where $\dot{n}_{co2}$ is the molar flow rate of $CO_2$ measured on the anode side, F is the Faraday constant, I is the current, and V is the uncorrected cell voltage.

In-plane conductivity of the AEM soaked in 0.5 M $K_2CO_3$ was found to be 7 ± 2 mS·$cm^{-1}$ across five measured samples. This leads to an ASR of 0.70 Ω·$cm^2$ for a 50 μm membrane, which is far less than the total ASR measuring using impedance spectroscopy. This indicates that a significant portion of the ohmic resistance within the cell arises from interfacial or kinetic losses.

pH measurements

The steady-state inlet and outlet solution pH values for the 60 mA·cm-2 current hold are given in the bar plot in Figure 5 for the three solution concentrations of 0.5, 1, and 2 M $K_2CO_3$. The plot shows that regardless of the initial concentration, the concentration of $OH^-$ increases by approximately one order of magnitude across the cell, indicating that OH- generated at the cathode is successfully transported out of the cathode compartment instead of being transported across the AEM. While there is a notable increase in pH, only a small fraction (<7%) of the carbonate fed is transported across the membrane at the current densities tested. The maximization of $CO_3^{-2}$ transport across the membrane and $OH^-$ transport out of the cell requires careful optimization of flows, applied current densities, and electrode design, which is beyond the scope of this proof-of-concept study. The steady-state pH values are a single indicator of a complex system with pH gradients that depend strongly on proximity to the catalyst surface. It could be advantageous for a fully integrated capture process to maximize the pH of the regenerated capture solution such that it can more efficiently absorb $CO_2$ during the capture step.

Flow rate effect

The effect of the catholyte flow rate was examined through a series of current hold experiments at 60 mA·cm$^{-2}$. The peristaltic pump flow rate was set to 5, 25, or 50 ml·min$^{-1}$ for 10 minute intervals, which were each followed by an impedance sweep. The effect of the flow rate for the 1 M $K_2CO_3$ 1 mm and zero gap configurations is shown in Figure 6. For the 1 mm gap, increasing the catholyte flow rate has a minimal effect on the faradaic efficiency. The zero gap shows a much more pronounced effect of catholyte flow rate with the 50 ml·min$^{-1}$ flow increasing the faradaic efficiency by almost 10% compared to the 5 ml·min$^{-1}$ flow. This is likely due to the rapid sweeping of generated $OH^-$ out of the cell and away from the membrane, allowing incoming $CO_3^{-2}$ to be a more dominant charge-carrying species in the system. Cell voltage was unaffected by flow rate. Further flow rate experiments using the 1 mm gap configuration and different concentrations of catholyte did not show a significant flow rate effect.

## Claims

**1.** A system (2) for capturing carbon dioxide in an aqueous alkaline solution (12) and electrochemically releasing the captured carbon dioxide to a hydrogen-comprising gas stream (6) while simultaneously regenerating the aqueous alkaline solution (12), said system (2) comprising:

a) a contactor unit (8) for bringing air (10) or another carbon dioxide comprising gas stream into contact with the aqueous alkaline solution (12) thereby capturing carbon dioxide by the at least partial transformation of the aqueous alkaline solution (12) into a carbonate and/or bicarbonate comprising solution (14);
b) an electrochemical cell (16) comprising an anion-exchange membrane (18) and a cathode compartment (20) and an anode compartment (22), said anion-exchange membrane (20) separating the cathode compartment (20) from the anode compartment (22);
c) a first feeder (24) that supplies the carbonate and/or bicarbonate comprising solution (14) to the cathode compartment (20) thereby enabling a hydrogen evolution reaction to take place in order to generate hydroxide ions thus regenerating the aqueous alkaline solution (12) and transporting carbonate anions through the anion-exchange membrane (18) to the anode compartment (22);
d) a second feeder (26) that supplies a hydrogen comprising gas stream (28) to the anode compartment (22) thereby providing the anode as hydrogen depolarized anode thus evolving gaseous carbon dioxide; and
e) an exhaust gas duct (30) to evacuate the hydrogen depleted and carbon dioxide enriched gas stream (6) from the anode compartment (22) for further processing of the components of the hydrogen depleted and carbon dioxide enriched gas stream (6), preferably of the carbon dioxide content therein.

**2.** The system according to claim 1 wherein
the hydrogen generated in the cathode compartment (20) is recycled via a recycling duct (32) into the anode compartment (22) as hydrogen feed.

**3.** The system according to claim 1 or 2 wherein the reactions in the cathode compartment (20) take place in the liquid phase and reactions in the anode compartment (22) take place in the gas phase.

**4.** The system according to any of the preceding claims wherein a 3D electrode, preferably a stainless steel expanded mesh, is employed at the cathode side and a gas diffusion electrode, preferably a catalyst-coated gas diffusion electrode, is employed at the anode side.

**5.** The system according to claim 4, wherein the catalyst coating comprises Pt/C.

**6.** The system according to any of the preceding claims wherein carbonate or bicarbonate is used as the feed to the cathode compartment (20).

**7.** The system according to any of the preceding claims wherein an electrical potential (34) is applied over the electrochemical cell (16) to drive the electrochemical reactions on both sides of the electrochemical cell (18).

**8.** The system according to any of the preceding claims wherein the ratio of hydrogen to carbon dioxide in the anode compartment is regulated through an adjustment of the current or the flowrate of the hydrogen feed.

FIG 1

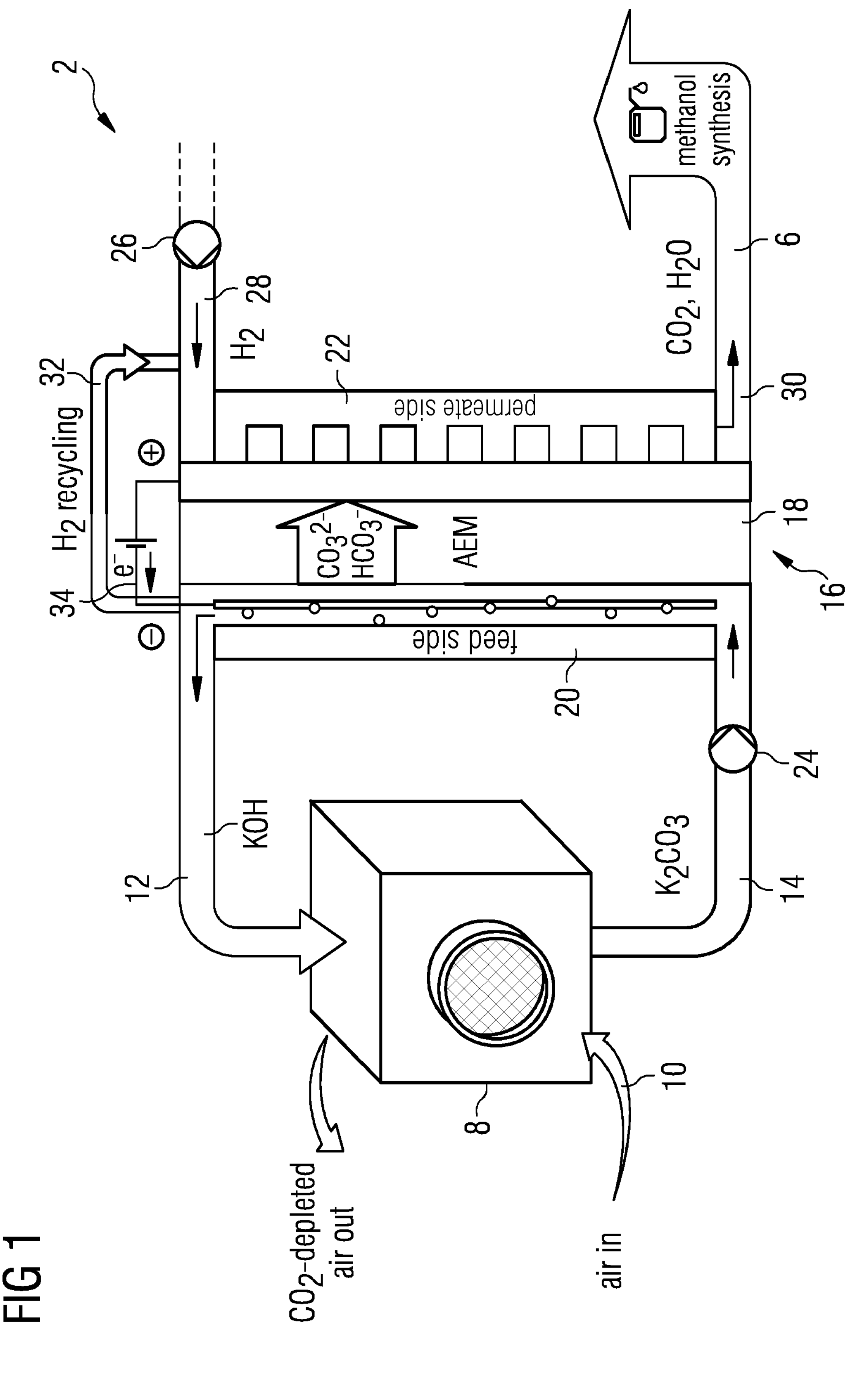
2
26
28
$H_2$
22
32
$H_2$ recycling
$CO_2$, $H_2O$
6
methanol synthesis
30
permeate side
34
$e^-$
$CO_3^{2-}$
$HCO_3^-$
AEM
18
16
feed side
20
24
KOH
$K_2CO_3$
12
14
8
10
$CO_2$-depleted air out
air in

FIG 2

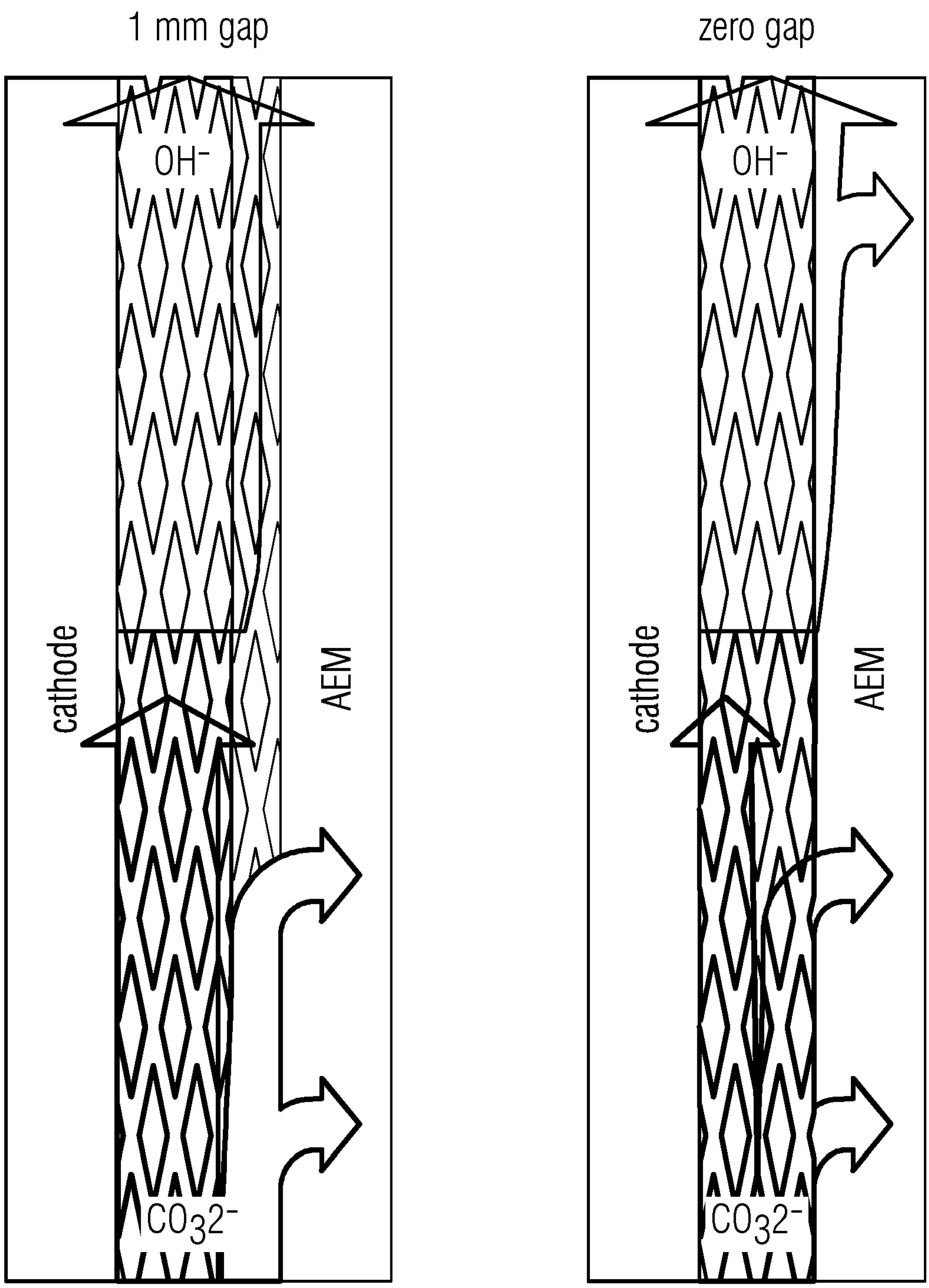

FIG 3

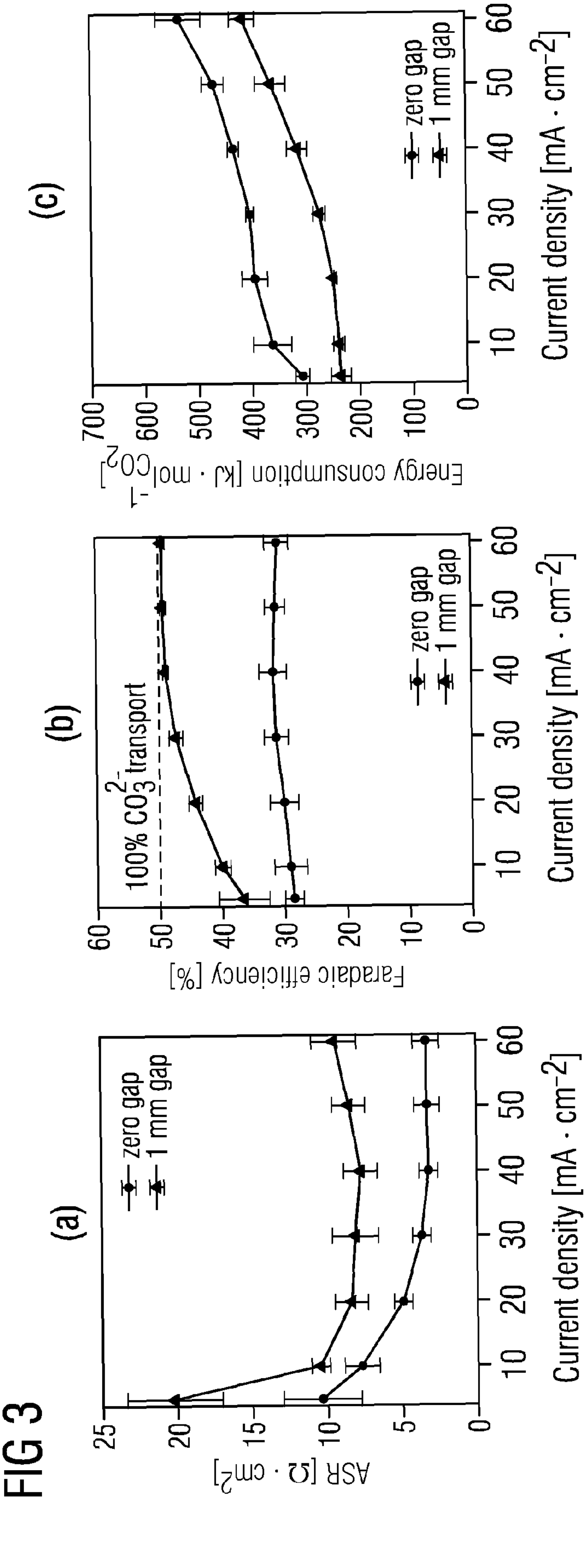
(a)
zero gap
1 mm gap
ASR [Ω · cm²]
Current density [mA · cm⁻²]
(b)
100% CO3 2- transport
zero gap
1 mm gap
Faradaic efficiency [%]
Current density [mA · cm⁻²]
(c)
zero gap
1 mm gap
Energy consumption [kJ · mol CO2 ⁻¹]
Current density [mA · cm⁻²]

FIG 4

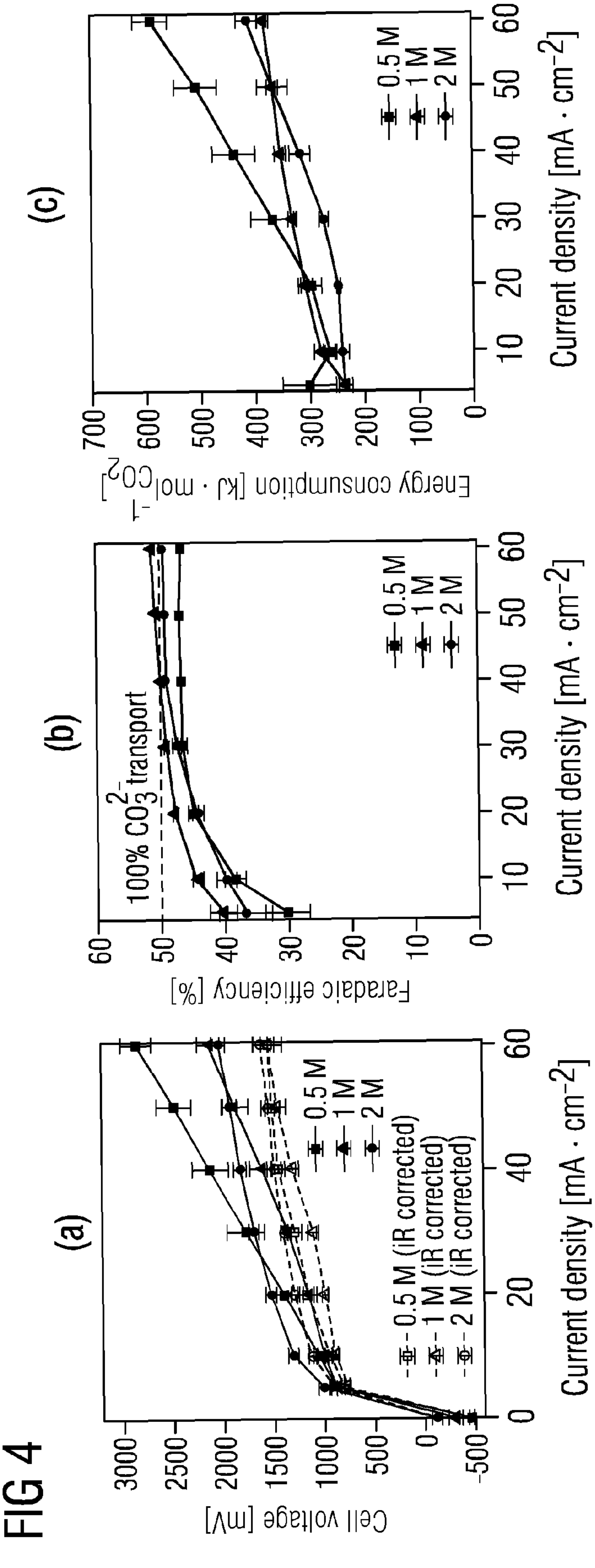
(a)
Cell voltage [mV]
Current density [mA · cm$^{-2}$]
0.5 M (iR corrected)
1 M (iR corrected)
2 M (iR corrected)
0.5 M
1 M
2 M
(b)
Faradaic efficiency [%]
100% $CO_3^{2-}$ transport
Current density [mA · cm$^{-2}$]
0.5 M
1 M
2 M
(c)
Energy consumption [kJ · mol$_{CO_2}^{-1}$]
Current density [mA · cm$^{-2}$]
0.5 M
1 M
2 M

FIG 5

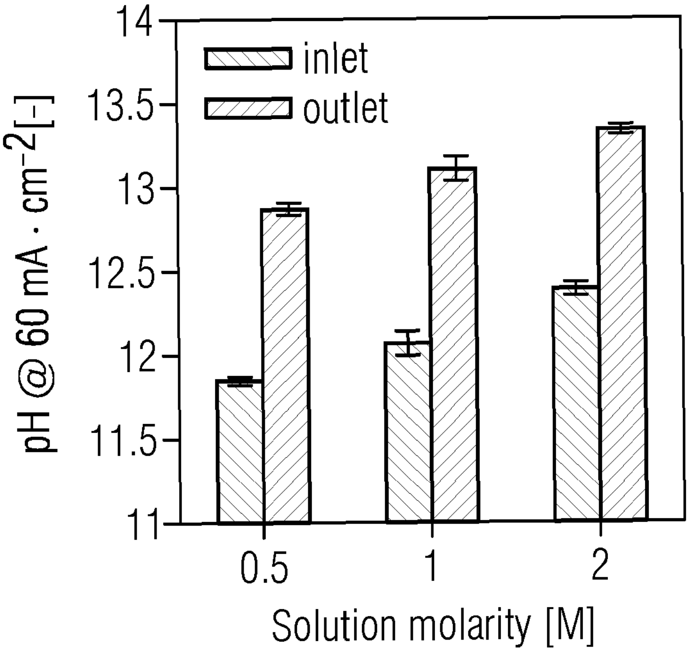
14
13.5
13
12.5
12
11.5
11
inlet
outlet
pH @ 60 mA · cm-2[-]
0.5
1
2
Solution molarity [M]

FIG 6

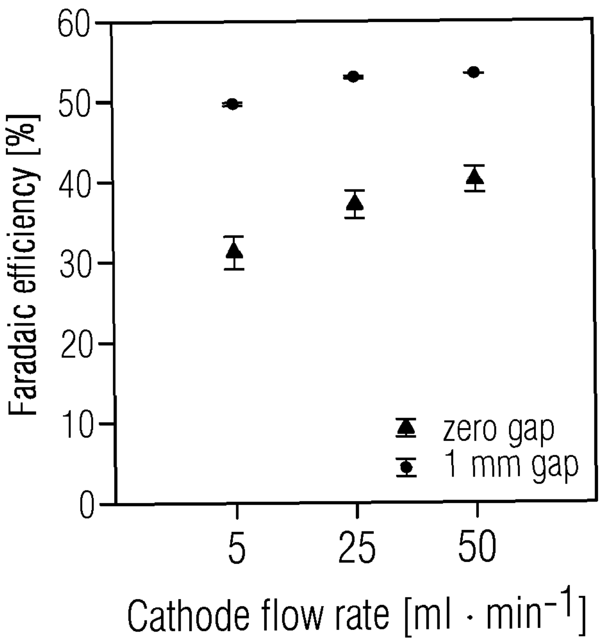
60
50
40
30
20
10
0
Faradaic efficiency [%]
zero gap
1 mm gap
5
25
50
Cathode flow rate [ml · min-1]

Europäisches Patentamt
European Patent Office
Office européen des brevets

# EUROPEAN SEARCH REPORT

Application Number
EP 22 17 0163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 741 863 A1 (EVONIK OPERATIONS GMBH [DE]) 25 November 2020 (2020-11-25)<br>* figure 2 *<br>* claim 1 *<br>----- | 1-8 | INV.<br>B01D53/14<br>B01D53/62<br>C25B1/01<br>C25B1/16<br>B01D53/96 |
| A | US 2017/256812 A1 (YOON YEO IL [KR] ET AL) 7 September 2017 (2017-09-07)<br>* the whole document *<br>----- | 1-8 | |
| A | US 2017/072361 A1 (KOREA INST ENERGY RES [KR]) 16 March 2017 (2017-03-16)<br>* the whole document *<br>----- | 1-8 | |
| A | US 3 511 712 A (GINER JOSE) 12 May 1970 (1970-05-12)<br>* the whole document *<br>----- | 1-8 | |
| Y | US 4 337 126 A (GILLIGAN III THOMAS J ET AL) 29 June 1982 (1982-06-29)<br>* claim 1 *<br>* claim 5 *<br>* claim 7 *<br>* claim 9 *<br>* figure 1 *<br>----- | 1-8 | TECHNICAL FIELDS SEARCHED (IPC)<br>B01D<br>C25B |

The present search report has been drawn up for all claims

1

| Place of search | Date of completion of the search | Examiner |
|---|---|---|
| Munich | 20 December 2022 | Thorner, Gentien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 17 0163

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2022

| Patent document cited in search report | Publication date | Patent family member(s) | Publication date |
|---|---|---|---|
| EP 3741863 A1 | 25-11-2020 | EP 3741863 A1 | 25-11-2020 |
| | | EP 3741864 A1 | 25-11-2020 |
| | | ES 2914714 T3 | 15-06-2022 |
| US 2017256812 A1 | 07-09-2017 | KR 101541994 B1 | 04-08-2015 |
| | | US 2017256812 A1 | 07-09-2017 |
| | | WO 2015115874 A1 | 06-08-2015 |
| US 2017072361 A1 | 16-03-2017 | CN 106457138 A | 22-02-2017 |
| | | KR 20150105042 A | 16-09-2015 |
| | | US 2017072361 A1 | 16-03-2017 |
| | | WO 2015133757 A1 | 11-09-2015 |
| US 3511712 A | 12-05-1970 | DE 1769074 A1 | 27-05-1971 |
| | | FR 1582055 A | 26-09-1969 |
| | | GB 1158854 A | 23-07-1969 |
| | | US 3511712 A | 12-05-1970 |
| US 4337126 A | 29-06-1982 | NONE | |

EPO FORM P0459

For more details about this annex : see Official Journal of the European Patent Office, No. 12/82